# EUROPEAN PATENT SPECIFICATION

(11) **EP 1 419 335 B1**
(45) Date of publication and mention of the grant of the patent: **26.03.2008**
(21) Application number: 01948146.4
(22) Date of filing: 02.07.2001
(51) Int. Cl.: F16K 43/00, F16K 5/20

(54) **THE WAY OF REPLACEMENT OF MAIN SEALS IN A BALL VALVE AND A BALL VALVE**
AUSTAUSCHBARES DICHTUNGSVERFAHREN FÜR EIN KUGELVENTIL
PROCEDE D'ECHANGE DES JOINTS DE SIEGE DANS UNE VANNE A BOISSEAU SPHERIQUE

(30) Priority: 23.04.2001 PL 34725501
(43) Date of publication of application: 19.05.2004
(73) Proprietor: Zaklad Urzadzen Gazowniczych "Gazomet", 63-900 Rawicz (PL)
(72) Inventor: KAPCZYNSKI, Przemyslaw, PL-60-688 Poznan (PL); KALUZA, Stanislaw, PL-63-900 Rawicz (PL)
(74) Representative: WALTHER, WALTHER & HINZ Patentanwälte - European Patent Attorneys
(86) International application number: PCT/PL2001/000057
(87) International publication number: WO 2002/086366

(56) References cited:
- GB-A- 2 213 564
- US-A- 4 273 152

## Description

This invention relates to the method for replacement of main seals in a ball valve and a ball valve for carrying out the method.

There are known ball valves with possibility of repairing them in an emergency situations without the necessity of disassembly of valves from a gas piping.

Nowadays, there are widely offered valves with the possibility of replacement of stem seals without the necessity of cutting off or detachment of such a valve from a gas piping but ball valves of a type "Top Entry" e.g. these which construction enables removing a ball closing component from a body and replacing main seals e.g. seals of the body with the ball closing component without disassembly of the valve from a gas piping are still used very rarely.

Previously mentioned valves are made of a body inside of which there is a ball closing component, of seal assemblies located slidably in the recess of the body, and of the stem with seals. The body is closed by a cover.

Each of seal assemblies contains a sediment ring called also mounting having the seal placed from the side of the ball closing component.

There is a shaped spring, made of an elastic wire, among the sediment ring and seal rings placed in the rear part of the recess which ensures leak tightness at small pressures. Free ends of the spring are bent.

After cutting off gas supply, degassing of the valve, dismounting of the stem and removing a cover, these springs are put forward, which enables shifting of mountings of main seals in passage axis of the main valve and taking off the ball closing component out of the body and next dismounting of sediment rings in order to replace or repair seals. In the above mentioned case leak tightness at high pressure is ensured first of all by pressure of gas on floatingly mounted mountings of main seals, as there is lack of full spring compensation.

Described above solution is proportionally simple, but as a result of using two gradual seals there may be problems with leak tightness at indirect pressures e.g. pressures which are between little and mean pressures and between mean and high pressures.

Moreover a shape of the spring does not ensure equal pressure on the whole circuit.

U.S. Patent 4,273,152 describes a ball valve control assembly with the ball comprising a central flow passage for receiving the fluid flow therethrough. At right angles to this flow passage the housing of the valve comprises ports that are closable by means of a screw cap. In the region of the screw cap, the ball has a groove for receiving the seal. Accordingly, the screw cap must be removed in order to replace the seal.

GB 2213564 also shows a ball valve control assembly in which, in order to rotate the ball, a seal receiving ring is frist displaced by means of compressed air so that the seal is subjected to little or no wear at all when the ball is rotated.

The method of replacement of main seals in a ball valve according to the invention relys on cutting off gas supply, degassing of the valve, dismounting of a stem, removing a cover from a body, shifting sediment rings in the axis of passage of main valve and dismounting of a ball closing component and pushing forward and taking off sediment rings in order to replace or repair seals, characterised in that, the working agent in the form of a gas, advantageously compressed air, one delivers from outside to working chambers, previously formed in the recesses of the body from the side of a ball closing component and then sediment rings are shifted in the axis of the passage of the main valve through interaction by pressure of working agent on the working surface of a flange of each sediment ring.

One equalizes pressure and disassemblies closing rings which shield working chambers from the side of a ball closing component before removing sediment rings.

The ball valve, which is used in the above mentioned method is equipped with a ball closing component and with sediment rings of seals assemblies placed slidably in the recesses of the body, moreover, sediment rings contain seals placed from the side of a ball closing component, is characterised in that at the side surface of each sediment ring there is a flange, adhering at the side surface of a recess of the body, having the working surface situated from the ball closing component.

The body recess space contains two chambers.

First of them is a working chamber situated from the side of a ball closing component between the working surface of a flange of a sediment ring and a closing ring which is connected separably with the inner part of the body, but the second this is a chamber situated at back side of the wall of a recess, meanwhile the working chamber is connected in a passage way with the interior of the body.

In the flange, which is situated on a sediment ring, from the side of adhering of a flange to the side surface of the recess there is a seal ring mounted.

In the closing ring, shielding the working chamber, a seal ring, situated at the side of the sediment ring, is mounted.

The solution, according to the invention, enables in case of an emergency damage of a main seal, suitable survey and repair of a ball valve without necessity of disassembly of the valve from a gas pipe, which brings costs savings connected with cutting off the valve from a gas pipe and shortens the time of shut down of a gas pipe.

Moreover, the invention enables for assembly of ball valves in factory conditions, without the necessity of using specific tools; there is not necessary to use special distance segment rings. This makes both the process of assembly easier and it shortens the time of its realization.

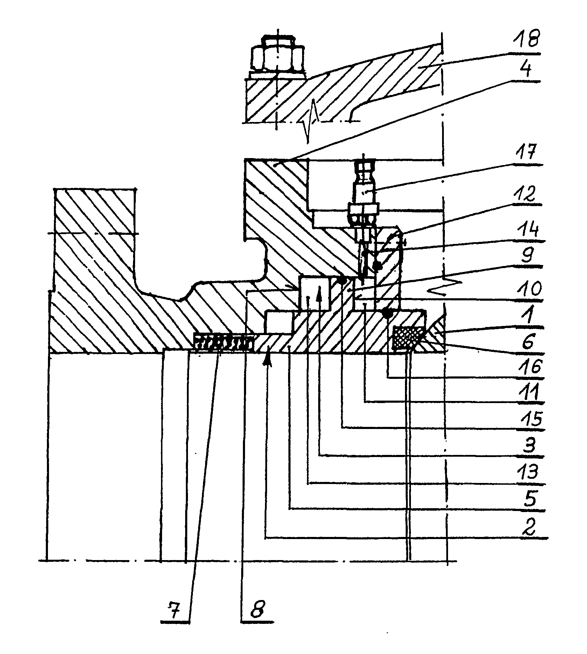

The object of the invention is shown in the example in the drawing, showing the fragment of a ball valve in intersection, in cut set, with a main seal visualized, situated at one side of a ball closing component.

The method of replacement of main seals in a ball valve according to the invention relys on cutting off gas supply and degassing of the valve.

Having done these basic things connected with industrial safety, next one dismounts a stem, and unscrews and removes a cover 18 from a body 4.

Then one connects compressed air system installation with connecting ends 17 and to working chambers 11 made in recesses 3 of a body 4 one delivers compressed air from outside. As the result of influence of pressure of compressed air on working surfaces 10 of flanges 9 one moves sediment rings 5 in a passage axis of the main valve causing its stand off from a ball closing component 1.

Then one removes the ball closing component 1 from the body and having equalized pressures and having disassembled closing rings 12 shielding working chambers 11 one puts forward and takes away sediment rings 5 from the interior of the body 4 in order to repair or replace seals 6.

A ball valve, which enables above mentioned replacement of main seals is equipped with the ball closing component 1 and seal assemblies 2 placed slidably in recesses 3 of a body 4 at both sides of a ball closing component 1.

Each seal assembly 2 is built of a sediment ring 5, containing, from the side of the ball closing component 1, the seal 6 and a pack of compensating springs 7 placed inside the end of the sediment ring 5, from the side of the back wall 8 of the recess 3.

On the side surface of the sediment ring 5 there is a flange 9, adhering to the lateral surface of a recess 3, having the working surface 10 placed from the side of a ball closing component 1. The space of the recess 3 contains the working chamber 11 placed from the side of a ball closing component 1 between the working surface 10 of the flange 9 and the closing ring 12 and the chamber 13 placed from the rear side of the wall 8 of the recess 3.

The closing ring 12 is screwed down into the inner part of the body 4.

The working chamber 11 is connected to the interior of the body 4 through the passage hole 14.

In the flange 9 of the sediment ring 5, from the side of adhesion to the lateral surface of the recess 3 of the body 4, the seal ring 15, of the type "0" is placed, but the seal ring 16 of the type "0" is placed in the closing ring 12 from the side of the sediment ring 5.

In the end of the passage hole 14, from the side of the interior of the body 4, connecting end 17 is screwed down f.e. fast nipple enabling connection to the compressed air installation.

The cover 18, in which the stem, not shown on the drawing, is mounted, is screwed down to the body 4.

## Claims

1. A method for replacement of main seals in a ball valve relying on cutting off gas supply and on degassing of the valve, dismounting of a stem and removing a cover from a body and removing sediment rings (5) for replacement or repairing the seals (6),
**characterised in that**,
in a recess (3) a body (4) in which sediment rings (5) are placed, one makes working chambers (11), and then one delivers to working chambers (11) working factor in the form of a gas, advantageously compressed air and by pressure of working factor on working surface (10) of a flange (9) of each sediment ring (5), sediment rings (5) are shifted in the axis of passage of the main valve whereas one equalizes pressure and disassembles ball closing component (1) and closing rings (12) which shield working chambers (11) from the side of the ball closing component before removing sediment rings (5).

## Patentansprüche

1. Verfahren zum Austauschen von Hauptdichtungen in einem Kugelventil beruhend auf: Abstellen der Gasversorgung und Entgasen des Ventils, Abmontieren eines Schafts, Abmontieren eines Schafts und Abnehmen eines Deckels von einem Körper und Entfernen von Absetzringen (5) zum Austausch bzw. zur Reparatur von Dichtungen (6),
**dadurch gekennzeichnet, dass**
in einer Ausnehmung (3) eines Körpers (4), in der Absetzringe (5) eingesetzt sind, Arbeitskammern (11) gebildet werden und dass dann ein Arbeitsmedium in Form eines Gases, vorzugsweise in Form von Druckluft, den Arbeitskammern (11) zugeführt wird, und dass, durch den Druck des Arbeitsmediums auf die Arbeitsfläche (10) eines Flansches (9) eines jeweiligen Absetzringes (5), die Absetzringe (5) in der Durchgangsachse des Hauptventils verschoben werden, wobei der Druck ausgeglichen wird, und die Verschlusskugel 1 und Verschlussringe (12), die die Arbeitskammern (11) seitlich in der Verschlusskugel 1 abschirmen, auseinander genommen werden, bevor die Absetzringe (5) entfernt werden.

## Revendications

1. Procédé de remplacement de joints principaux dans un robinet à bille comprenant les étapes suivantes : on coupe l'alimentation en gaz et on dégaze le robinet, on démonte une tige et on enlève un couvercle d'un corps et on enlève les anneaux d'appui (5) pour remplacer ou réparer les joints (6),
**caractérisé en ce que**,
dans un évidement (3) d'un corps (4) dans lequel sont placés des anneaux d'appui (5) on ménage des chambres de travail (11) et ensuite on achemine dans les chambres de travail (11) un agent de travail sous forme d'un gaz, avantageusement de l'air comprimé, et par la pression de l'agent de travail sur la surface de travail (10) d'un collet (9) de chaque anneau d'appui (5), des anneaux d'appui (5) sont déplacés dans l'axe de passage du robinet principal tandis que l'on égalise la pression et que l'on démonte la bille de fermeture (1) et les anneaux de fermeture (12) qui isolent les chambres de travail (11) sur le côté de la bille de fermeture avant d'enlever les anneaux d'appui (5).
